# EUROPÄISCHE PATENTSCHRIFT

(11) **EP 2 718 669 B1**
(45) Veröffentlichungstag und Bekanntmachung des Hinweises auf die Patenterteilung: **10.08.2016**
(21) Anmeldenummer: 12726810.0
(22) Anmeldetag: 11.06.2012
(51) Int. Cl.: G01C 15/00, G01S 7/481, G01S 17/89

(54) **LASERSCANNER UND VERFAHREN ZUM ANSTEUERN EINES LASERSCANNERS**
LASER SCANNER AND METHOD FOR CONTROLLING A LASER SCANNER
SCANNER LASER ET PROCÉDÉ DE COMMANDE D'UN SCANNER LASER

(30) Priorität: 09.06.2011 DE 102011050997; 29.07.2011 DE 102011052294
(43) Veröffentlichungstag der Anmeldung: 16.04.2014
(73) Patentinhaber: Zoller & Fröhlich GmbH, 88239 Wangen im Allgäu (DE)
(72) Erfinder: FRÖHLICH, Christoph, 88239 Wangen im Allgäu (DE); METTENLEITER, Markus, 88316 Isny (DE)
(74) Vertreter: Winter, Brandl, Fürniss, Hübner, Röss, Kaiser, Polte - Partnerschaft mbB
(86) Internationale Anmeldenummer: PCT/EP2012/061044
(87) Internationale Veröffentlichungsnummer: WO 2012/168490

(56) Entgegenhaltungen:
- DE-A1-102006 031 114
- DE-B3-102009 055 988
- US-B1- 7 184 088
- T. ABMAYR, F. HÄRTL, A. WAGNER, D. BURSCHKA, G. HIRZINGER, C. FRÖHLICH: "Calibration and registration framework for 3D reconstruction of the Kirche Seefeld", INTERNATIONAL SOCIETY FOR PHOTOGRAMMETRY AND REMOTE SENSING, Bd. 18, Nr. 5/W1, 25. Februar 2009 (2009-02-25), - 28. Februar 2009 (2009-02-28), XP002682421,
- PIOTR JASIOBEDZKI ET AL: "Laser Eye - a new 3D sensor for active vision", SENSOR FUSION VI : 7 - 8 SEPTEMBER 1993, BOSTON, MASSACHUSETTS, SPIE, BELLINGHAM, WASH., USA , Bd. 2059 7. September 1993 (1993-09-07), Seiten 316-321, XP002626856, DOI: 10.1117/12.150236 ISBN: 978-0-8194-1324-6 Gefunden im Internet: URL:http://scitation.aip.org/getpdf/servle t/GetPDFServlet?filetype=pdf&id=PSISDG0020 59000001000316000001&idtype=cvips&doi=10.1 117/12.150236&prog=normal> [gefunden am 2011-03-08]

## Beschreibung

Die Erfindung betrifft einen Laserscanner gemäß dem Oberbegriff des Patentanspruchs 1 und ein Verfahren zum Ansteuern eines derartigen Laserscanners.

Aus der DE 202 08 077 U1 ist ein Laserscanner bekannt, der beispielsweise zur 3D-Vermessung von Objekten verwendet wird. Bei einem derartigen Scanner wird der von einem optischen Sensor abgegebene Laser-Messstrahl durch ein mechanisches Strahlablenkungssystem derart abgelenkt, dass eine flächendeckende, dreidimensionale räumliche Umgebungsvermessung ermöglicht ist. Die digitalisierten Messdaten werden auf einem Rechnersystem abgelegt und stehen dort zur weiteren Bearbeitung und Visualisierung des vermessenen Objektes zur Verfügung.

Die 3D-Vermessung erfolgt durch Führen des modulierten Laserlichtes über die zu vermessende Umgebung, wobei für unterschiedliche Raumrichtungen sowohl der Entfernungs- als auch der Reflektionswert punktuell vermessen werden kann. Aus der Anordnung aller vermessenen Raumrichtungen resultieren Entfernungs- und Reflektivitätsbilder. Die Entfernungsbilder geben die Geometrie der Umgebung wieder und die Reflektivitätsbilder deren visuelle Abbildung, analog zu den Grauwertbildern einer Videokamera. Beide Bilder korrespondieren pixelweise und sind aufgrund der eigenständigen, aktiven Beleuchtung mit Laserlicht weitgehend unabhängig von Umwelteinflüssen.

Bei der bekannten Lösung ist das Strahlablenksystem mit einem Ablenk-Spiegel ausgeführt, der in einem Drehkopf des Laserscanners gelagert ist. Dieser ist umlaufend rotierend um eine erste Achse, vorzugsweise eine Horizontalachse drehbar am Scanner gelagert, der seinerseits um zumindest 180° um eine Achse verschwenkbar ist, die rechtwinklig zur Drehachse, beispielsweise in Vertikalrichtung verläuft. Bei der bekannten Lösung ist der Drehkopf durch ein etwa zylinderförmiges Gehäuse gebildet, das zwischen zwei Stützschenkeln des Scanners gelagert ist, wobei in einem dieser Schenkel der Antrieb des Drehkopfs und in dem anderen Schenkel der Sender und der Empfänger und gegebenenfalls ein halbdurchlässiger Spiegel zur Messdatenverwertung angeordnet sind.

In der DE 10 2006 024 534 A1 ist ein 3D-Laserscanner offenbart, bei dem der Drehkopf zur Verminderung der rotierenden Masse und zur Verringerung einer Unwucht in einer Schnittebene senkrecht zur Drehachse in erster Näherung als Vieleck ausgeführt ist, wobei das Austrittsfenster (wirkt gleichzeitig als Eintrittsfenster) für den Messstrahl in einer der Seitenflächen angeordnet ist.

Mit den vorbeschriebenen 3D-Scannern lassen sich, wie vorstehend erläutert, Bildinformationen in Form von 3D-Pixelwolken erfassen, die dann in eine Art Grauwertbild des Messobjekts umgerechnet werden können. In vielen Fällen ist jedoch eine Farbabbildung des Messobjekts gewünscht. Die Farbinformationen können über eine Kamera abgetastet werden, die beispielsweise auf das Gehäuse des Laserscanners aufgesetzt wird. Eine derartige Lösung wird beispielsweise von der Anmelderin unter dem Namen "M-Cam" zu dem 3D-Laserscanner "Z + F Imager"® angeboten. Letztgenannter 3D-Laserscanner ist in der Druckschrift "Calibration and registration framework for 3D reconstruction of the Kirche Seefeld" näher beschrieben. Es sind auch Lösungen bekannt, bei denen die Farbinformation des Messobjektes über eine im Strahlengang einer Spiegelanordnung angebrachte Kamera erfasst werden. Ein Nachteil dieser Lösung kann darin bestehen, dass durch Ablenkspiegel und eventuell vorhandene andere optische Elemente Farbverfälschungen des Kamera Bildes auftreten können.

Systeme mit auf das Gehäuse des Laserscanners aufgesetzter externer Kamera haben den Nachteil, dass sie einen erheblichen Bauraum benötigen und darüber hinaus relativ schwer sind. Aufgrund der exzentrischen Anordnung der Kamera kann es zu einer Unwucht und somit zu einem Taumeln des Messkopfs kommen. Darüber hinaus ist die Befestigung der Kamera fehleranfällig, da geeignete Stecker und freie Kabel vorgesehen werden müssen. Der Antrieb des Laserscanners ist des Weiteren durch die aufgesetzte Kamera mechanisch erheblich beansprucht. Aufgrund der unterschiedlichen Perspektiven der aufgesetzten Kamera und des eigentlichen Laserscanners kann es in der Abbildung zu Schatten kommen. Derartige Parallaxenfehler müssen dann durch eine aufwendige Z-Bufferberechnung eliminiert werden.

Die Druckschrift DE 10 2009 055 988 B3 zeigt einen Laserscanner zum optischen Abtasten und Vermessen einer Umgebung mit einem Lichtsender, der mittels eines Rotorspiegels einen Sendelichtstrahl aussendet, sowie mit einem Lichtempfänger, der einen von einem Objekt in der Umgebung des Laserscanners reflektierten Empfangslichtstrahl nach erneutem passieren des Rotorspiegels empfängt. Des Weiteren weist der Laserscanner eine Farbkamera auf, welche Farbbilder der Umgebung des Laserscanners aufnimmt.

Die Druckschrift "Laser Eye - a new 3D sensor for active vision", Piotr Jasiobedzki et al., zeigt eine Kopplung eines Infrarot Laserscanners mit einer CCD Kamera.

Die Druckschrift DE 10 2006 031 114 A1 zeigt ein 3D-Kombinationsmessgerät aus digitaler Kamera und Laserscanner.

Demgegenüber liegt der Erfindung die Aufgabe zugrunde, einen Laserscanner und ein Verfahren zum Ansteuern eines Laserscanners zu schaffen, mit denen eine Farbabbildung eines Messobjekts ohne die oben genannten Nachteile möglich ist.

Diese Aufgabe wird im Hinblick auf den Laserscanner durch die Merkmalskombination des Patentanspruchs 1 und im Hinblick auf das Verfahren durch die Merkmalskombination des nebengeordneten Patentanspruchs 12 gelöst.

Erfindungsgemäß hat der Laserscanner einen drehbar gelagerten Drehkopf, an dem ein Spiegel oder eine Spiegelanordnung angeordnet ist, über den ein von einem Sender abgegebener Messstrahl auf ein Messobjekt und/oder ein von diesem reflektierter Strahl in Richtung auf einen Empfänger umlenkbar ist. Der Laserscanner hat des Weiteren eine elektronische Farbkamera zur Erfassung von Farbinformationen des Messobjektes, die über eine CPU mit den Messdaten zu einer 3D-Farbabbildung des Messobjektes verrechnet werden können. Erfindungsgemäß ist die Kamera am oder im Drehkopf angebracht, sodass bei angesteuerter Kamera die erforderlichen Farbinformationen ohne jegliche Farbverfälschung durch Spiegel oder Strahlteiler erfasst werden können. Dabei ist die Kamera oder ein Kamerafenster diametral zu einem Austrittsfenster für den Laserstrahl am Drehkopf angeordnet. Eine derartige Lösung lässt sich mit minimaler Unwucht ausführen und hat zudem den Vorteil, dass ein Parallaxenfehler vermieden werden kann, da die Kameraachse zumindest virtuell konzentrisch zur Laserstrahlachse verläuft. Diese Lösung zeichnet sich darüber hinaus durch einen kompakten Aufbau aus.

Bei einem besonders bevorzugten Ausführungsbeispiel ist die Kamera oder ein Kamerafenster derart angeordnet, dass die virtuellen optischen Zentren der Kamera und des Messstrahls im Wesentlichen zusammen fallen.

Bei einem Ausführungsbeispiel der Erfindung ist die Kamera mit ihrer Optik nicht parallel zu dem Mess- oder Sendestrahl des Lasers ausgerichtet, sondern derart, dass ihre Hauptpunktslage/Brennpunkt virtuell in etwa im optischen Zentrum des Spiegels liegt, sodass die Kamera exakt in der gleichen "Blickrichtung" wie der Laserscanner "sieht". Auf diese Weise ist eine exzellente Kolinearität zwischen dem gescannten Bild und dem über die Kamera aufgenommenen Bild gewährleistet.

Bei einem Ausführungsbeispiel ist im Strahlengang des Kameraobjektivs ein optisches Element, beispielsweise ein Kameraspiegel angeordnet, über den die Haupt punktslage des Kameraobjektivs virtuell in das optische Zentrum des Spiegels des Scanners gerichtet wird.

Das optische Element und die Kamera sind vorzugsweise im Drehkopf angeordnet, wobei dann die Kamera durch das Kamerafenster hindurch die Bild- und Farbinformationen aufnimmt.

Dabei kann beispielsweise die Achse des Objektivs in etwa parallel zur Drehachse angeordnet sein, wobei dann durch das optische Element, vorzugsweise den Kameraspiegel, der Strahlengang der Kamera um etwa 90° umgelenkt wird.

Die Kontaktierung von Signal- und Versorgungsleitungen der Kamera erfolgt bei einem Ausführungsbeispiel über eine Schleifringanordnung.

Diese Schleifringanordnung kann besonders einfach ausgeführt sein, wenn am Drehkopf Schleifringe angeordnet sind, denen gehäuseseitig Kontaktpins zugeordnet sind, über die die jeweilige Kontaktierung erfolgt.

Die Reibung während des eigentlichen Scanvorgangs lässt sich minimieren, wenn die Kontaktstifte während des Scannens von den Schleifringen abgehoben werden, sodass in einem ersten Messschritt die 3D-Daten erfasst werden und über einen weiteren Schritt durch Ansteuerung der Kamera die Farbinformationen des Messobjektes abgetastet werden.

Die Anmelderin behält sich vor, auf die Reibungsminimierung durch Abheben der Schleifringanordnung oder der Kontaktpinanordnung vom jeweils anderen Bauelement (Schleifringanordnung/Kontaktpinanordnung) einen eigenen unabhängigen Anspruch zu richten.

Zur Verringerung von Farbfehlern kann die Farbkamera mit einem integrierten Weißabgleich ausgeführt sein. Hierzu kann die vorhandene Referenzstrecke des Laser-Entfernungsmessers verwendet werden.

Die CPU und der Antrieb sind vorzugsweise so ausgelegt, dass der Drehkopf und/oder der Scanner in bestimmten Drehwinkelpositionen festlegbar ist, um einen Bereich des Messobjektes über die Kamera abzutasten. Durch aufeinanderfolgendes Wiederholen der Erfassung bei unterschiedlichen Winkelpositionen des Drehkopfs und/oder des Scanners kann dann das gesamte Messobjekt über die Farbkamera erfasst werden.

Die Kamera wird vorzugsweise als Chipkamera oder Platinenkamera ausgeführt.

Wie bereits erläutert, besteht eine Besonderheit des erfindungsgemäßen Verfahrens darin, dass die 3D-Datenerfassung und die Farbinformationserfassung in getrennten Messgängen erfolgen, wobei die Kontaktierung über die Schleifringanordnung während der 3D-Datenerfassung aufgehoben ist, um die Reibung und dadurch bedingten Verschleiß der Schleifringanordnung während des Scanvorgangs zu unterbinden.

Bevorzugte Ausführungsbeispiele der Erfindung werden im Folgenden anhand schematischer Zeichnungen näher erläutert. Es zeigen:
Figur 1 eine Seitenansicht eines Mittelteiles eines erfindungsgemäßen 3D-Laserscanners;
Figur 2 einen Schnitt entlang der Linie A - A in Figur 1;
Figur 3 einen Schnitt entlang der Linie B - B in Figur 1 und
Figur 4 einen Strahlengang eines weiteren Ausführungsbeispiels.

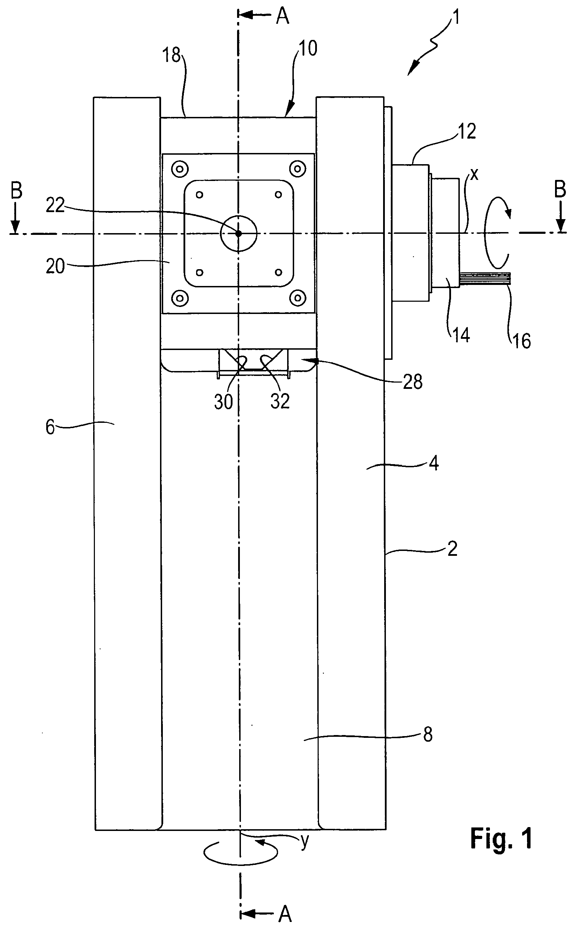

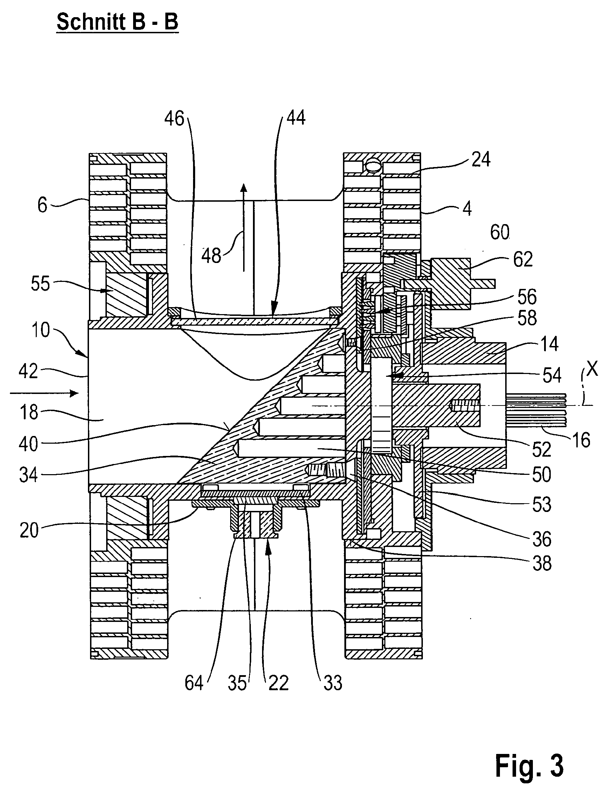

Figur 1 zeigt einen Mittelteil eines 3D-Laserscanners 1, wie er beispielsweise in der DE 10 2006 024 534 A1 erläutert und wie er auch von der Anmelderin unter der Marke "Z + F Imager"® angeboten wird. Nicht dargestellt ist ein Drehantrieb des Scanners 1 sowie die eigentliche Lasersende- und Empfangseinheit, die seitlich angesetzt sind. Der Scanner 1 ist mittels des nicht dargestellten Antriebs um eine Vertikalachse Y drehbar. Ein Gehäuse 2 des Scanners 1 hat in der Darstellung gemäß Figur 1 eine etwa U-förmige Struktur mit zwei Seitenwangen 4, 6 und einen Mittelteil 8, wobei sich die beiden Seitenwangen 6, 4 über das Mittelteil 2 hinaus erstrecken. In diesem Bereich ist an den Seitenwangen 4, 6 ein Drehkopf 10 gelagert, der über einen weiteren, nicht dargestellten Drehantrieb um eine Achse X drehbar ist, wobei hohe Drehzahlen von bis zu 100 Umdrehungen pro Sekunde erzielbar sind, um das Messobjekt abzutasten. In an sich bekannter Weise kann dann durch den rotierenden Drehkopf 10 und eine Drehung des gesamten Scanners 1 um die Achse Y ein 3D-Raum abgetastet werden, um eine 3D-Punkt-(Pixel-)Wolke zu erfassen, die über eine CPU zu den 3D-Messdaten umgerechnet wird. Die eigentliche Lasereinheit (Laser-Entfernungsmesser) mit einem Sender, einem Empfänger und gegebenenfalls einem halbdurchlässigen Spiegel ist an die Seitenwange 6 angesetzt, während der Drehantrieb des Drehkopfs 10 an einen Flansch 12 an der Seitenwange 4 angebracht ist. Die CPU ist ebenfalls an der Seitenwange 4 angebracht. Dabei erstreckt sich ein Stator (Wicklungen des Drehkopf Motors) 14 (siehe auch Figur 3) aus dem Flansch 12 heraus. Die mit dem Bezugszeichen 16 versehenen Kabel dienen zur Stromversorgung des Drehantriebs des Drehkopfs 10. An ein umfangsseitig mit mehreren Abflachungen ausgeführtes Gehäuse 18 des Drehkopfs 10 ist über eine Flanschplatte 20 eine digitale Kamera 22 angesetzt.

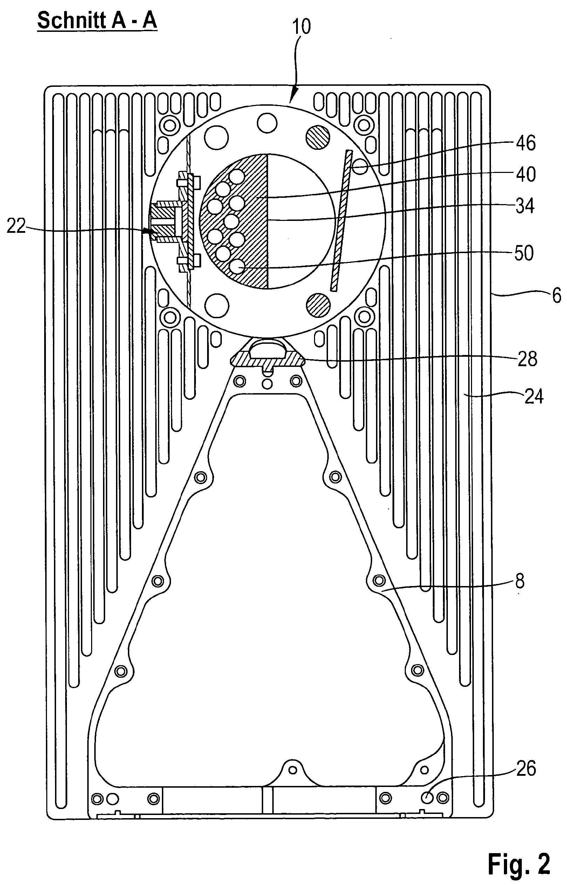

Figur 2 zeigt einen Schnitt entlang der Linie A - A in Figur 1. In dieser Schnittdarstellung erkennt man eine Innenfläche der Seitenwange 6, die an ihrer dem Drehkopf 10 zugewandten Großfläche mit Ausnehmungen 24 ausgeführt ist. Gemäß diesem Schnitt verjüngt sich das Mittelteil 8 von einer Basis 26 zum Drehkopf 10 hin dachförmig und trägt an seinem Scheitel ein Referenz-oder Kalibrier-Modul 28, über das eine Längenkalibrierung zum Ausgleich von Temperaturdriften des Laser Entfernungsmessers, sowie ein Weißabgleich der Farbkamera durchgeführt werden kann, indem entweder der Laserstrahl oder aber die Kameraoptik mit Bezug zum Referenz-Modul 28 ausgerichtet wird. Gemäß der Seitenansicht in Figur 1 hat dieses Referenz-Modul 28 in an sich bekannter Weise eine etwa V-förmige Struktur, wobei an einer Schrägfläche 30 eine optische Beschichtung und an der anderen Schrägfläche 32 ein Spiegel oder ebenfalls eine optische Beschichtung vorgesehen ist. Die Schrägfläche 30 mit einer optischen Beschichtung wird von der Achse Y geschnitten. Der Drehkopf 10 wirkt durch seine, vorzugsweise eckige, Außenkontur bei den hohen Umdrehungsgeschwindigkeiten wie ein Förderorgan, über das Luft bewegt wird. Die dabei entstehende turbulente Strömung wird zur Kühlung des Laserscanners verwendet, wobei die Ausnehmungen 24 als Kühlrippen wirken und somit die Wärmeaustauschfläche zur Kühlung des gesamten Scanners 1 vergrößern. In dem dachförmig ausgebildeten Mittelteil 8 ist ein Teil der Elektronik aufgenommen.

Figur 3 zeigt einen Schnitt entlang der Linie B - B in Figur 1. Aus den beiden Schnittdarstellungen erkennt man, dass die Kamera 22 als Chipkamera ausgeführt ist, bei der auf einer Platine 33 der eigentliche Aufnahmechip 35 und das Objektiv 64 angeordnet sind. Diese Chipkamera ist, wie erläutert, über die Flanschplatte 20 am Gehäuse 18 des Drehkopfs 10 befestigt. In dem Drehkopf 10 ist ein Spiegelkörper 34 gelagert, der über Befestigungsschrauben 36 an einem Boden 38 des Gehäuses 18 des Drehkopfs 10 befestigt ist. Der Spiegelkörper 34 hat eine um 45° zur X-Achse angestellte Spiegelfläche 40, an der ein von der nicht dargestellten Lasereinheit generierter, durch eine seitliche Eintrittsöffnung 42 des Gehäuses 18 eintretender Messstrahl in Richtung zu einem Strahlaustritt 44 umgelenkt wird, der durch ein Austrittsfenster 46 überdeckt ist. Gemäß der Darstellung in Figur 2 ist dieses Austrittsfenster 46 mit Bezug zur Zeichenebene in Figur 3 schräg angestellt, sodass direkte Rückreflektionen des ausgesandten Laserstrahles nicht in den Detektor des Empfangsteiles gelangen können.

Der in den Drehkopf 10 eintretende und durch das Austrittsfenster 46 austretende Laserstrahl ist in Figur 3 mit dem Pfeil 48 angedeutet. Gemäß der Darstellung in Figur 3 liegt die optische Achse des Austrittsfensters 46 diametral zur Kamera 22. Es kann ausreichen, wenn die virtuellen optischen Zentren der Kamera 22 und des eigentlichen Scanners zusammen fallen. Der Spiegelkörper 34 ist zur Gewichtsminimierung und zur Verringerung einer Unwucht mit Bohrungen 50 versehen. An den Boden 38 des Gehäuses 18 ist ein Wellenstummel 52 angesetzt, der einen nicht dargestellten Rotor des Drehantriebs trägt. Dieser Rotor ist entsprechend vom Stator des Drehantriebs 14 umgriffen. Auf dem Wellenstummel 52 ist eine Encoderscheibe 53 gelagert, die als Winkelgeber zur Erfassung der Drehwinkelposition des Drehkopfs 10 dient.

Der Drehkopf 10 ist im Bereich des Wellenstummels 52 und des Strahleintritts 42 über jeweils ein Lager, 54, 55 in der jeweiligen Seitenwange gelagert, wobei entsprechende Lageraufnahmen vorgesehen sind, die hier nicht weiter erläutert werden müssen. Die Stromversorgung der Kamera 22 und die Signalübertragung zu und von der Kamera erfolgt über die Leitungen 16, die durch die Seitenwange 4 hindurch zu einer Kontaktpinanordnung 56 geführt sind, die sich aus der Seitenwange 4 heraus in Richtung zum Boden 38 des Drehkopfs 10 erstrecken. Dabei ist jeder Pin entweder einer Signalleitung oder einer Stromzuführungsleitung oder Masse zugeordnet. An der gegenüberliegenden Großfläche des Bodens 38 ist eine Schleifringanordnung 58 vorgesehen, wobei jeder Stromversorgungsleitung oder Signalleitung in entsprechender Weise ein Schleifring oder ein Schleifringsektor zugeordnet ist. Vom Schleifring weg verlaufen dann wieder entsprechende Signalleitungen, Versorgungsleitungen (nicht dargestellt) zur Kamera 22 und sind dort mit der Platine 33 kontaktiert. Um Reibung während einer Rotation des Drehkopfs 10 zu vermeiden , ist ein Aktor 60 vorgesehen, über den die Kontaktpinanordnung 56 gegen die Kraft einer nicht dargestellten Federanordnung in Anlage an die Schleifringanordnung 58 gebracht werden kann, um die Stromversorgung und/oder den Signalabgriff zu ermöglichen. Durch die Federanordnung ist die Schleifringanordnung in eine Grundposition vorgespannt, in der keine Stromversorgung oder kein Signalabgriff an der Kamera 22 vorliegt. Bei der konkreten Lösung hat der Aktor 60 einen Elektromagneten 62, der die Kontaktpinanordnung 56 zur Kontaktierung in Richtung zur Schleifringanordnung verstellt. Anstelle des Elektromagneten kann selbstverständlich auch ein Aktor einer anderen Bauart, beispielsweise ein pneumatisches Stellelement oder dergleichen verwendet werden.

Zur Abtastung der 3D-Punktwolke wird der Scanner 1 um die Achse Y gedreht, wobei der Drehkopf 10 mit hoher Geschwindigkeit um die Achse X rotiert. Bei einer Umdrehung des Drehkopfs 10 wird durch den umlaufenden Laserstrahl eine in Vertikalrichtung (Ansicht nach Figur 1) liegende Ebene des zu vermessenden Objektes abgetastet. Die vollständige 3D-Abtastung erfolgt dann während der Verschwenkung des gesamten Scanners 1, sodass nach einer Verschwenkung um 180° ein nahezu vollständiges Abbild des Objektes vorliegt. Nicht abtastbar sind dabei die vom Mittelteil 8 abgedeckten Bereiche, wobei diese Abschattung durch die dachförmige Anschrägung minimiert ist. Während dieses Scanvorgangs ist die Pinanordnung 56 von der Schleifringanordnung 58 abgehoben. Nach Beendigung des Scans und Speicherung der Punktewolke wird der Aktor 60 angesteuert und somit die Kamera 22 aktiviert. Die Kamera 22 wird dann beispielsweise durch Ansteuerung des Antriebs des Drehkopfs 10 mit ihrer optischen Achse mit Bezug zu einer Horizontalebene ausgerichtet und der Scanner 1 schrittweise um seine Y-Achse verschwenkt. Prinzipiell kann auch der Scanner 1 in Winkelposition (bezogen auf die Y-Achse) gehalten werden und entsprechend der Drehkopf 10 zur Erfassung der Farbinformation um die X-Achse schrittweise umlaufen, bis ein Horizontal- oder Vertikalbereich umlaufend photographiert ist. Anschließend erfolgt dann ein Verschwenken/Drehen des Drehkopfs 10 um die X-Achse und/oder des Scanners um die Y-Achse bis das gesamte Messobjekt aufgenommen ist. Die Steuerung und der Antriebe des Drehkopfs 10 und der Schwenkachse des Scanners 1 (Y-Achse) sind demnach so ausgelegt, dass diese auf jede beliebige oder vorbestimmte Winkelposition ausgerichtet und dort gehalten werden können, um die Kamera 22 mit ihrer optischen Achse auf einen Bereich des Messobjekts auszurichten. Nach der Ausrichtung der optischen Achse der Kamera 22 mit Bezug zu einer vorbestimmten Horizontal- und/oder Vertikalebene des Messobjekts wird der Aktor 60 jeweils angesteuert, um die Pinanordnung 56 mit der Schleifringanordnung 58 zu kontaktieren und über die Kamera die entsprechenden Bildinformationen im Bereich dieser Horizontal- oder Vertikalebene aufgenommen.

Mit anderen Worten gesagt, nach dem Scan wird das Sichtfeld der Kamera über das Messobjekt geführt, in dem der Vertikal- und der Horizontalantrieb (Vertikalachse Y, Horizontalachse X) so angesteuert werden, dass jeweils im Haltemodus der Motoren ein Teil des Messobjektes fotografiert wird, bis das gesamte Objekt abgebildet worden ist. Die dabei ermittelten Bildinformationen werden dann rechnerisch mit der beim Scan ermittelten Punktwolke überlagert, sodass nach der Verrechnung eine detailgetreue Farbabbildung des Messobjektes vorliegt. Die von der Kamera 22 in den Winkelpositionen des Scanners (Y-Achse) und des Drehkopfs 10 (X-Achse) aufgenommenen benachbarten Bereiche überlappen einander vorzugsweise, so dass das Zusammenfügen der Bildinformationen vereinfacht ist.

Über den vor, während oder nach der Messung durchgeführten Weißabgleich die Kamera 22 auf die Farbtemperatur des Lichtes am Aufnahmeort abgeglichen wird.

Das beschriebene Ausführungsbeispiel hat noch den Nachteil, dass deren optische Achse nicht exakt im Strahlengang des Laserstrahls liegt, sodass es wegen der geringen verbleibenden Parallaxe zwischen Laser-Entfernungsmessung und Kamera bei ungünstigen Bedingungen zu Abschattungen kommen kann.

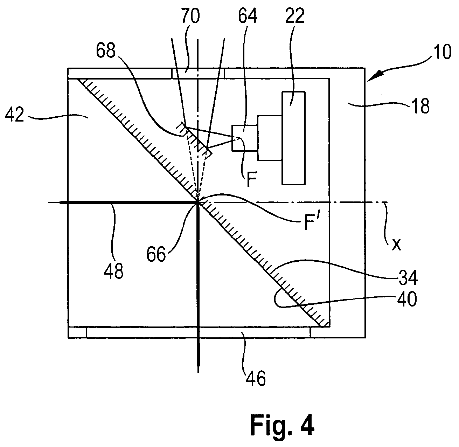

Bei dem anhand Figur 4 erläuterten Ausführungsbeispiel ist dieser Nachteil beseitigt, da die Konzentrizität der Sichtfelder von Kamera und Laserscanner gewährleistet ist.

Die Figur 4 zeigt lediglich den Strahlengang dieses verbesserten Ausführungsbeispiels, konstruktive Details sind nicht dargestellt. Ähnlich wie beim zuvor beschriebenen Ausführungsbeispiel hat der Drehkopf 10 ein Gehäuse 18, in dem der um 45° zur Achse X angestellte Spiegelkörper 34 mit seiner Spiegelfläche 40 gelagert ist. Wie vorstehend erläutert, wird an dieser Spiegelfläche 40 der von einer nicht dargestellten Lasereinheit generierte, durch die Eintrittsöffnung 42 eintretende Messstrahl 48 zum Austrittsfenster 46 hin umgelenkt und tritt durch dieses aus dem Drehkopf aus. Durch dieses tritt auch der vom Messobjekt reflektierte Strahl in den Drehkopf 10 ein und wird an der Spiegelfläche 40 zur Empfangseinheit hin umgelenkt. Insofern besteht kein Unterschied zu herkömmlichen Lösungen. Die Sende- und Empfangseinheit ist so ausgerichtet, dass die optische Achse des Laserstrahls in einem optischen Zentrum 66 der Spiegelfläche 40 liegt. Die zuvor beschriebene Kamera 22 ist bei diesem Ausführungsbeispiel in den Innenraum des Gehäuses 18 jenseits der Spiegelfläche 40 integriert. Wobei die optische Achse eines Objektivs 64 der Kamera etwa achsparallel zur Rotationsachse X des Drehkopfs 10 verläuft.

Im Strahlengang des Objektivs 64 liegt ein Kameraspiegel 68, der den Strahlengang des Objektivs 64 mit Bezug zu einem in der Gehäusewandung angeordneten Kamerafenster 70 umlenkt. Letzteres ist diametral zum Austrittsfenster 46 angeordnet. Es kann hinreichend sein, wenn die virtuellen optischen Zentren des Scanners und der Kamera zusammen fallen. Der Kameraspiegel 68 ist so gewählt, dass die Hauptpunktslage F des Objektivs 64 virtuell in das Zentrum 66 der Spiegelfläche 40 verschoben ist. Diese virtuelle Hauptpunktslage ist in Figur 4 mit F' angedeutet. D.h., die virtuelle Hauptpunktslage F' des Objektivs 64 und das optische Zentrum 66 des Spiegels fallen zusammen, sodass die Kamera 22 praktisch in der gleichen Blickrichtung wie der Scanner "sieht" - die Kollinearität zwischen Scan und Farbaufnahme ist gewährleistet. Demzufolge werden alle Punkte, die über den Scanner erfasst werden, mit einem über die Kamera 22 erfassten Farbwert belegt, sodass keine (durch die beim vorbeschriebenen Ausführungsbeispiel möglicherweise vorhandene) durch eine Parallaxe begründete Schattenbildung von nahen Objektiven zu befürchten ist. Dadurch kann auch eine aufwendige und fehlerträchtige Z-Buffer-Berechnung beim Fusionieren der Farbdaten mit den vom Scanner erfassten 3D-Daten entfallen.

Wie bereits vorstehend erwähnt, werden die Spiegelfläche 40 sowie die beiden Fenster 46, 70 in geeigneter Weise für ihren jeweiligen Einsatzzweck optimiert, wobei diese Optimierung in Richtung einer Verbesserung der optischen Qualität durch hochwertige Beschichtungen oder aber auch in Richtung einer Kostenminimierung erfolgen kann.

Die erfindungsgemäße Anordnung zeichnet sich aufgrund der integrierten Kamera 22 durch einen äußerst kompakten Aufbau aus.

Offenbart ist ein 3D-Laserscanner, bei dem eine Kamera in einen rotierenden Drehkopf integriert ist.

### Bezugszeichenliste

- 1: Scanner
- 2: Gehäuse
- 4: Seitenwange
- 6: Seitenwange
- 8: Mittelteil
- 10: Drehkopf
- 12: Flansch
- 14: Stator (Wicklungen des Drehantriebes)
- 16: Leitungen
- 18: Gehäuse des Drehkopfs
- 20: Flanschplatte
- 22: Kamera
- 24: Kühlrippen
- 26: Basis
- 28: Referenz-Modul
- 30: Schrägfläche
- 32: Schrägfläche
- 33: Platine
- 34: Spiegelkörper
- 35: Aufnahmechip
- 36: Befestigungsschraube
- 38: Boden Drehkopf
- 40: Spiegelfläche
- 42: Strahleintritt / Austritt zum Entfernungsmesser
- 44: Strahlaustritt / Eintritt zur Umgebung
- 46: Austrittsfenster
- 48: Laserstrahl
- 50: Bohrung in Spiegelkörper
- 52: Wellenstummel
- 53: Encoderscheibe
- 54: Lager
- 55: Lager
- 56: Kontaktpins
- 58: Schleifringanordnung
- 60: Aktor
- 62: Elektromagnet
- 64: Objektiv
- 66: optisches Zentrum Entfernungsmesser
- 68: Kameraspiegel
- 70: Kamerafenster

## Patentansprüche

1. Laserscanner mit einer ersten, vorzugsweise vertikalen, Drehachse und einem um eine weitere, vorzugsweise horizontale, Drehachse rotierenden Drehkopf (10), in dem ein Spiegel angeordnet ist, über den ein von einem Sender abgegebener Messstrahl auf ein Messobjekt und/oder ein von diesem reflektierten Strahl in Richtung auf einen Empfänger umlenkbar ist, und mit einer Kamera (22) zur Erfassung von Farbinformationen des Messobjektes, die über eine CPU mit Messdaten des Laserscanners zu einer 3D-Farbabbildung des Messobjektes verrechenbar sind, **dadurch gekennzeichnet, dass** die Kamera (22) am Drehkopf (10) gehalten ist, wobei die Kamera (22) oder ein Kamerafenster (70) diametral zu einem Austrittsfenster (46) für den Laserstrahl angeordnet ist.

2. Laserscanner nach Patentanspruch 1, wobei dieser derart ausgelegt ist, dass eine Hauptpunktslage (F) eines Objektivs (64) der Kamera (22) virtuell im Bereich eines optischen Zentrums (66) des Spiegels liegt.

3. Laserscanner nach Patentanspruch 2, mit einem Kameraspiegel (68), über den der Strahlengang des Kameraobjektivs derart umgelenkt ist, dass er virtuell mit Bezug zum Zentrum (66) ausgerichtet ist.

4. Laserscanner nach Patentanspruch 2 oder 3, wobei die Kamera (22) und ein Kameraspiegel (68) im Drehkopf (10) aufgenommen sind.

5. Laserscanner nach einem der vorhergehenden Patentansprüche, wobei der Drehkopf (10) an einem Gehäuse (2) gelagert ist, und drehkopfseitige Signal- und Stromversorgungsleitungen über eine Schleifringanordnung (58) mit gehäuseseitigen Signal- und Versorgungsleitungen kontaktiert sind.

6. Laserscanner nach Patentanspruch 5, wobei die Schleifringanordnung (58) am Drehkopf (10) angeordnet ist und gehäuseseitig mit einer Kontaktstiftanordnung (56) kontaktierbar ist.

7. Laserscanner nach Patentanspruch 6, wobei die Kontaktstiftanordnung (56) über einen Aktor (60) von einer abgehobenen Position in eine Kontaktposition bewegbar ist.

8. Laserscanner nach Patentanspruch 7, wobei die CPU derart ausgelegt ist, dass die Kontaktstiftanordnung (56) im Anschluss an einen Scan aus der abgehobenen Position in die Kontaktposition bringbar ist, um über die Kamera (22) bei Verdrehen des Scanners (1) und des Drehkopfs (10) in geeignete Winkelpositionen Farbinformationen zu erfassen.

9. Laserscanner nach einem der vorhergehenden Patentansprüche, mit einem Referenz-Modul (28) zum Weißabgleich.

10. Laserscanner nach einem der vorhergehenden Patentansprüche, wobei die Kamera (22) eine Chip-oder Platinenkamera ist.

11. Verfahren zum Ansteuern eines Laserscanners nach einem der vorhergehenden Patentansprüche, wobei zunächst bei rotierendem Drehkopf (10) und verschwenktem Scanner (1) 3D-Daten des Messobjektes erfasst werden wobei die Kamera abgeschaltet ist und anschließend bei abgeschaltetem Laser-Entfernungsmesser der Drehkopf (10) und der Scanner (1) durch Verstellen um ihre Drehachse/Schwenkachse in Winkelpositionen verfahren werden und Farbinformationen über die diametral zu einem Austrittsfenster für den Laserstrahl angeordnete Kamera (22) erfasst werden und dann mittels der CPU zu einer 3D-Farbabbildung verrechnet werden.

12. Verfahren nach Patentanspruch 11, wobei die Erfassung der Farbinformation in verschiedenen Horizontalebenen durch Einstellung des Drehkopfs (10) und/oder des Scanners (1) auf verschiedene Winkelpositionen wiederholt wird, bis die Farbinformationen des gesamten Messobjekts vorliegen.

13. Verfahren nach Patentanspruch 12, wobei die durch Veränderung der Winkelpositionen erfassten benachbarten Horizontal- oder Vertikalebenenbereiche einander überlappen.

## Claims

1. Laser scanner having a first, preferably vertical rotation axis and a rotating head (10) which rotates about another, preferably horizontal rotation axis and in which there is arranged a mirror by means of which a measurement beam transmitted by a transmitter can be redirected onto a measurement object and/or a beam which is reflected thereby can be redirected in the direction towards a receiver, and having a camera (22) for detecting colour information of the measurement object which can be processed via a CPU with measurement data of the laser scanner to form a 3D colour image of the measurement object, **characterised in that** the camera (22) is retained on the rotating head (10), wherein the camera (22) or a camera aperture (70) is arranged diametrically relative to an outlet window (46) for the laser beam.

2. Laser scanner according to patent claim 1, wherein it is configured in such a manner that a main location position (F) of an objective lens (64) of the camera (22) is located virtually in the region of an optical centre (66) of the mirror.

3. Laser scanner according to patent claim 2, having a camera mirror (68) by means of which the beam path of the camera objective lens is redirected in such a manner that it is orientated virtually with reference to the centre (66).

4. Laser scanner according to patent claim 2 or 3, wherein the camera (22) and a camera mirror (68) are received in the rotating head (10).

5. Laser scanner according to any one of the preceding patent claims, wherein the rotating head (10) is supported on a housing (2), and rotation-head-side signal and power supply lines are contacted by means of a slip ring arrangement (58) with housing-side signal and power supply lines.

6. Laser scanner according to patent claim 5, wherein the slip ring arrangement (58) is arranged on the rotating head (10) and can be contacted at the housing side with a contact pin arrangement (56).

7. Laser scanner according to patent claim 6, wherein the contact pin arrangement (56) can be moved by means of an actuator (60) from a raised position into a contact position.

8. Laser scanner according to patent claim 7, wherein the CPU is configured in such a manner that the contact pin arrangement (56) can be moved following a scan from the raised position into the contact position in order to detect colour information via the camera (22) when the scanner (1) and the rotating head (10) are rotated into suitable angular positions.

9. Laser scanner according to any one of the preceding claims, having a reference module (28) for white balance.

10. Laser scanner according to any one of the preceding patent claims, wherein the camera (22) is a chip or a board camera.

11. Method for controlling a laser scanner according to any one of the preceding patent claims, wherein initially, with the rotating head (10) rotating and the scanner (1) pivoted, 3D data of the measurement object are detected, wherein the camera is switched off and subsequently with the laser distance measurement device switched off the rotating head (10) and the scanner (1) are moved by means of adjustment about the rotation axis/pivot axis thereof into angular positions and colour information relating to the camera (22) which is arranged diametrically with respect to an outlet aperture for the laser beam is detected and then processed by means of the CPU to form a 3D colour image.

12. Method according to patent claim 11, wherein the detection of the colour information is repeated in different horizontal planes by adjusting the rotating head (10) and/or the scanner (1) to different angular positions until the colour information of the entire measurement object is present.

13. Method according to patent claim 12, wherein the adjacent horizontal or vertical plane regions detected by changing the angular positions overlap with each other.

## Revendications

1. Scanner laser avec un premier axe de rotation, de préférence vertical, et avec une tête rotative (10) tournant autour d'un autre axe de rotation, de préférence horizontal, dans laquelle est disposé un miroir par le biais duquel un rayonnement de mesure délivré par un émetteur sur un objet à mesurer et/ou un rayonnement réfléchi par ce dernier est dévié en direction d'un récepteur, et avec une caméra (22) pour la détection d'informations de couleur de l'objet à mesurer, qui peuvent être calculées par le biais d'une CPU avec des données de mesure du scanner laser pour former une reproduction 3D en couleur de l'objet à mesurer, **caractérisé en ce que** la caméra (22) est maintenue sur la tête rotative (10), dans lequel la caméra (22) ou une fenêtre de caméra (70) est disposée de manière diamétrale à une fenêtre de sortie (46) pour le rayonnement laser.

2. Scanner laser selon la revendication 1, dans lequel celui-ci est conçu de manière telle qu'une position du point principal (F) d'un objectif (64) de la caméra (22) est située virtuellement dans la zone d'un centre optique (66) du miroir.

3. Scanner laser selon la revendication 2, avec un miroir de caméra (68) par le biais duquel la trajectoire du faisceau de l'objectif de la caméra est déviée de manière telle qu'elle est orientée virtuellement en référence au centre (66).

4. Scanner laser selon la revendication 2 ou 3, dans lequel la caméra (22) et un miroir de caméra (68) sont logés dans la tête rotative (10).

5. Scanner laser selon l'une quelconque des revendications précédentes, dans lequel la tête rotative (10) est logée sur un boîtier (2) et des lignes de signaux et d'alimentation électrique côté tête rotative sont mises en contact par le biais d'un agencement de bague collectrice (58) avec des lignes de signaux et d'alimentation électrique côté boîtier.

6. Scanner laser selon la revendication 5, dans lequel l'agencement de bague collectrice (58) est disposé sur la tête rotative (10) et peut être mis en contact côté boîtier avec un agencement de broches de contact (56).

7. Scanner laser selon la revendication 6, dans lequel l'agencement de broches de contact (56) peut être déplacé par le biais d'un actionneur (60) d'une position surélevée à une position de contact.

8. Scanner laser selon la revendication 7, dans lequel la CPU est conçue de manière telle que l'agencement de broches de contact (56) peut être amené, à la fin d'un balayage, de la position surélevée à la position de contact afin de détecter par le biais de la caméra (22) des informations de couleur en cas de rotation du scanner (1) et de la tête rotative (10) à des positions angulaires appropriées.

9. Scanner laser selon l'une quelconque des revendications précédentes, avec un module de référence (28) pour l'équilibre des blancs.

10. Scanner laser selon l'une quelconque des revendications précédentes, dans lequel la caméra (22) est une caméra sur puce ou platine.

11. Procédé de commande d'un scanner laser selon l'une quelconque des revendications précédentes, dans lequel d'abord, avec une tête rotative (10) tournante et un scanner (1) pivotant, des données 3D de l'objet à mesurer sont détectées, dans lequel la caméra est mise hors tension et, ensuite avec un télémètre à laser hors tension, la tête rotative (10) et le scanner (1) sont amenés, par un déplacement autour de leur axe de rotation/axe de pivotement, à des positions angulaires et des informations de couleur sont détectées par le biais de la caméra (22) disposée diamétralement à une fenêtre de sortie pour le faisceau laser et ensuite calculées au moyen de la CPU en une reproduction 3D en couleur.

12. Procédé selon la revendication 11, dans lequel la détection des informations de couleur est répétée dans différents plans horizontaux par un réglage de la tête rotative (10) et/ou du scanner (1) à différentes positions angulaires jusqu'à ce que les informations de couleur de tout l'objet à mesurer soient présentes.

13. Procédé selon la revendication 12, dans lequel, par la modification des positions angulaires, des zones horizontales ou verticales voisines détectées se chevauchent les unes les autres.
